# EUROPÄISCHE PATENTSCHRIFT

(11) **EP 2 641 471 B1**
(45) Veröffentlichungstag und Bekanntmachung des Hinweises auf die Patenterteilung: **11.08.2021**
(21) Anmeldenummer: 13001328.7
(22) Anmeldetag: 15.03.2013
(51) Int. Cl.: A22C 13/00

(54) **VERFAHREN UND VORRICHTUNG ZUR BESCHICHTUNG EINES RAFFBAREN INNENBESCHICHTETEN GEWÜRZSCHLAUCHS**
METHOD AND DEVICE FOR INTERNALLY COATING A FOLDABLE SEASONING CASING
PROCÉD'E ET DISPOSITIF POUR RECOUVRIR INTERNEMENT UN BOYAU À ÉPICE SERRABLE

(30) Priorität: 20.03.2012 DE 102012005446
(43) Veröffentlichungstag der Anmeldung: 25.09.2013
(73) Patentinhaber: World Pac International AG, 9496 Balzers (LI)
(72) Erfinder:
(74) Vertreter: Lemcke, Brommer & Partner Patentanwälte Partnerschaft mbB

(56) Entgegenhaltungen:
- EP-A1- 1 911 352
- EP-A1- 2 436 268
- DE-A1- 10 124 581
- DE-A1- 10 314 699
- DE-A1- 19 500 470
- US-A- 2 901 358

## Beschreibung

Die Erfindung betrifft ein Verfahren und eine Vorrichtung zur Beschichtung schlauchförmiger Lebensmittel-Verpackungshüllen, insbesondere Därme, mit Aromastoffen in Partikelform, insbesondere Gewürzen, indem die schlauchförmige Verpackungshülle innenseitig mit Kleber benetzt wird und auf die gebildete Kleberschicht die gewünschten Aromastoffe aufgebracht werden.

Schlauchförmige Wursthüllen, die innenseitig mit Gewürzpartikeln beschichtet werden, sind in der DE 195 00 470 vorgeschlagen worden. Dabei wird von einer gerafften Wursthülle ausgegangen, die nach dem Abziehen in die zylindrische Form zunächst innenseitig mit einem flüssigen Kleber benetzt wird. Sodann gleitet die Wursthülle an einem inneren Beschichtungsring entlang, wodurch der Kleber gleichmäßiger verteilt und in der gewünschten Dicke abgestrichen werden soll. Im weiteren Verlauf wird über ein zentrales Zuführrohr Druckluft und Gewürz radial gegen die Innenfläche der Wursthülle geblasen, wo es von der aufgetragenen Kleberschicht gehalten wird. Anschließend muss die Wursthülle getrocknet werden.

Um die Haftung der Gewürze zu verbessern, kann am Ende des Zuführrohres eine rotierende Schleuderscheibe vorgesehen sein, die das Gewürz unter zusätzlichem Fliehkrafteinfluss gegen die Innenseite der Wursthülle schleudert.

In der Praxis hat sich dieses System jedoch nicht bewährt, weil keine gleichmäßige und genügend starke Beschichtung mit Aromastoffen auf Dauer gewährleistet war.

Stattdessen ist es immer noch üblich, schlauchförmige Hüllen, die mit Gewürz beschichtet werden sollen, zuerst in Form von Flachfolien herzustellen und zu beschichten. Erst anschließend wird die beschichtete Flachfolie dann in Schlauchform gebracht, indem sie durch passende Formschultern in Zylinderform gebracht und dann entlang ihrer benachbarten oder sich überlappender Längsränder durch Nähen oder Kleben verschlossen wird.

Dieser Prozess ist zeit- und energieaufwendig, denn der Kleber muss in feuchtem, flüssigem Zustand auf die Folie aufgebracht werden mit der Folge, dass die Folie nach dem Aufbringen der Aromastoffe einer intensiven Trocknung unterzogen werden muss. Erst nach dem Trocknen kann die mit Kleber und Gewürz beschichtete Flachfolie dann in Schlauchform gebracht und durch Nähen, Kleben oder Schweißen verschlossen und konfektioniert werden.

Hingegen wären diese Verarbeitungsschritte im Feuchtezustand der Folie sowohl aus hygienischen wie auch aus arbeitstechnischen Gründen unmöglich.

Durch die DE 103 14 699 A1 ist es zum einen bekannt, körnige oder stückige Nahrungsmittelzusatzstoffe auf eine in flacher Bahnform vorliegende Lebensmittel-Verpackungshülle aufzustreuen. Dabei wird zuvor eine Bindemittelschicht auf die Hülle aufgetragen oder die körnigen Nahrungsmittelzusatzstoffe werden vor dem Auftrag mit einem Bindemittel kombiniert. Diese Flachbahn wird dann zu einem Schlauch geformt und mit einer Naht fixiert. Zum anderen ist es aus dieser Schrift bekannt, schlauchförmige Hüllen auf der Innenseite mit Farb- und/oder Aromastoffen zu tränken bzw. zu benetzen mit Hilfe einer Flüssigkeitsblase, die durch das Innere der Hülle hindurchgeführt wird. Als Material für die Hülle wird eine saugfähige Textilhülle offenbart, die aus Kunststofffasern bestehen kann.

Des Weiteren schlägt die nicht vorveröffentlichte EP 2 436 268 A1 bereits vor, schlauchförmige Lebensmittel-Verpackungshüllen innenseitig mit Kleber zu benetzen, die Hülle danach durch eine Quetschzone und eine in Vorschubrichtung folgende weitere Quetschzone zu führen, wobei die schlauchförmige Verpackungshülle im Bereich zwischen den genannten Quetschzonen durch einen in das Schlauchinnere eingebrachten partikelförmigen Aromastoff-Vorrat und ein Luftpolster in die Form eines aufgeblasenen Sackes gebracht wird.

Von diesem Stand der Technik ausgehend, liegt der vorliegenden Erfindung die Aufgabe zugrunde, ein Verfahren zur Beschichtung mit Aromastoffen, die nicht in einer Trägerflüssigkeit schwimmen, sondern in Partikelform vorliegen, also insbesondere Gewürzen, Kräuter, pulverisierten Fruchtaromen und dergleichen, zu entwickeln. Dabei soll als Ausgangsmaterial keine Flachfolie, sondern direkt schlauchförmige Verpackungsfolie verwendet werden, und zwar sowohl Naturdärme wie auch ein- oder mehrlagige Faserdärme, ein- oder mehrlagige Kunststoffdärme und beliebige sonstige schlauchförmige Textilhüllen. Des Weiteren soll die erfindungsgemäße Verpackungsfolie raffbar sein, damit sie gut gelagert, transportiert und insbesondere bei automatischen Füll- und Klippmaschinen weiterverarbeitet werden kann, ohne dass beim Raffen ein lokales Abplatzen der Gewürze zu befürchten ist.

Diese Aufgabe wird erfindungsgemäß dadurch gelöst, dass die innenseitig mit Kleber benetzte Verpackungshülle durch einen in das Schlauchinnere eingebrachten partikelförmigen Aromastoff-Vorrat und ein Gaspolster, insbesondere Luftpolster, in eine nicht-flache, offene Querschnittsform gebracht wird, dass die Verpackungshülle an ihrer mit Kleber benetzten Innenseite Aromastoffe aus dem Aromastoff-Vorrat mitnimmt, wenn sie durch den Aromastoff-Vorrat hindurchgezogen wird und dass die Verpackungshülle zumindest innenseitig überwiegend aus einem wasseraufnehmenden Kunststoff besteht.

Die Erfindung beruht zum einen auf der Erkenntnis, dass das Gewicht der in die Verpackungshülle eingefüllten Aromapartikel in Verbindung mit dem darüber befindlichen Luftpolster eine intensive Anlagerung der Aromapartikel an der mit Kleber beschichteten Innenseite der Verpackungshülle bewirkt. Zum anderen beruht die Erfindung auf der Erkenntnis, dass die vorherige Benetzung der Verpackungshülle mit Kleber überraschend dadurch begünstigt wird, dass die Verpackungshülle innenseitig - ganzflächig oder lokal - aus einem wasseraufnehmenden Material besteht.

Die Innenbeschichtung schlauchförmiger Verpackungshüllen, indem sie durch einen eingefüllten Aromastoff-Vorrat hindurchgezogen werden, ist zwar schon seit über 50 Jahren für Flüssigkeiten bekannt. So ist es durch die US 2,901,358 bekannt, einen für Wursthüllen bestimmten Celluloseschlauch zunächst mit Glycerin vorzubehandeln, so dass er eine etwa gelartige Konsistenz erhält und den Schlauch dann zwischen einer unteren und einer oberen Quetschzone mit einer wasserlöslichen Chromchlorid-Lösung sowie einem Luftpolster zu füllen. Wird der Schlauch dann durch die beiden genannten Quetschzonen hindurchgezogen, erhält er an seiner Innenseite eine Beschichtung mit der ChromchloridLösung. Hinter der zweiten Quetschzone wird der Schlauch wieder durch ein Luftpolster in aufgeblasene Form gebracht und durch Heißluft von 100°C bis 110°C auf eine Restfeuchtigkeit von 4 % bis 6 % getrocknet, worauf er dann in Flachform gebracht und auf einer Rolle aufgewickelt wird. Diese Innenbeschichtung dient dazu, dass die Wursthülle später von der eingefüllten Wurst leichter abgeschält werden kann. Es lag aber nicht nahe, dieses Prinzip so abzuwandeln, dass eine Beschichtung mit partikelförmigen Aromastoffen ermöglicht wird, die nicht in einer Trägerflüssigkeit schwimmen, sondern in trockener Form vorliegen.

Erst recht lag es nicht nahe, dass die innenseitige Benetzung der Verpackungshülle mit Kleber dadurch begünstigt wird, indem die Verpackungshülle innenseitig zumindest überwiegend aus wasseraufnehmendem Kunststoff besteht. Dadurch ergibt sich überraschend eine intensivere, gleichmäßigere und schnellere Benetzung der Verpackungshülle durch den Kleber. Sie kann dadurch mit höherer Vorschubgeschwindigkeit durch die Beschichtungsanlage hindurchgezogen werden, bei gleichzeitiger Verbesserung der Beschichtungsqualität.

Als wasseraufnehmende Kunststoffe kommen unterschiedliche Werkstoffe in Betracht, auch solche mit Fasern, so dass sich zusätzliche Kapillar-Effekte ergeben. Besonders geeignet sind Polyamide, vorzugsweise PA 4, PA 6 oder PA 6.6, die sich durch vergleichsweise hohe Wasseraufnahme auszeichnen.

Eine weitere Verbesserung der Klebstoff-Aufnahme lässt sich dadurch erzielen, dass die Verpackungshülle innenseitig aufgerauht ist. Die gewünschte Oberflächenrauigkeit kann durch physikalische oder chemische Verfahren erzeugt werden, vorzugsweise aber durch UV-Bestrahlung oder durch Laserstrahlung oder durch Corona-Behandlung, insbesondere in Kombination mit einem Strecken der Verpackungshülle. Angestrebt wird eine Rauhigkeit von zumindest 0,05 µm, insbesondere zumindest 0,1 µm.

Vorzugsweise wird die Kunststoff-Innenlage vollflächig, also über den gesamten inneren Umfang der Verpackungshülle vorgesehen. Es liegt aber auch im Rahmen der Erfindung, die Kunststoff-Innenlage als Gewebe, Vlies oder dergleichen aus feinen Kunststoff-, insbesondere Polyamid-Fasern herzustellen und eventuell bereits durch diesen Materialmix die gewünschte Rauhigkeit zu erzielen.

Grundsätzlich kann die Verpackungshülle vollständig aus dem wasseraufnehmenden Material bestehen. Da aber das bevorzugt eingesetzte Polyamid relativ teuer ist, empfiehlt es sich, die Verpackungshülle mehrlagig auszubilden und nur innenseitig eine dünne Lage aus wasseraufnehmendem Material vorzusehen. Die Dicke dieser Material-Lage kann unterhalb 1/10 mm liegen, vorzugsweise im Bereich zwischen etwa 5 µm bis etwa 50 µm, insbesondere zwischen etwa 6 µm bis etwa 20 µm.

Die Innenlage aus wasseraufnehmendem Material wird außen zweckmäßig mit kostengünstigeren Werkstoffen, insbesondere Polyethylen kombiniert, damit die gewünschte Reißfestigkeit gewährleistet ist.

Die Kombination mit Polyethylen bietet außerdem den großen Vorteil, dass die Verpackungshülle eine ausreichende Sperrwirkung gegenüber Sauerstoff und Wasserdampf erhält.

Der mehrlagige Aufbau der Verpackungshülle kann durch Coextrusion oder durch Laminieren hergestellt werden.

Zweckmäßig erfolgt die Benetzung der Verpackungshülle mit Kleber, indem ein flüssiger Kleber-Vorrat und ggf. ein Gaspolster in das Innere der in nicht flacher Form vorliegenden Schlauchhülle eingebracht werden und die Verpackungshülle durch den Kleber-Vorrat hindurchgezogen wird. Es empfiehlt sich dann, dass die Verpackungshülle nach ihrer Benetzung mit Kleber zumindest eine Quetschzone passiert. Diese Quetschzone erlaubt es, die an der Verpackungshülle verbleibende Klebermenge zu dosieren: Je stärker die Quetschwirkung ist, desto weniger Kleber vermag die Verpackungshülle durch die Quetschzone hindurch mitzunehmen.

Eine derartige Quetschzone kann auch unterhalb des Aromastoff-Vorrates angeordnet sein, um dessen unteren Abschluss zu bilden, wenn die Verpackungshülle anschließend mehr oder weniger steil nach oben durch den Aromastoff-Vorrat hindurchgezogen wird.

Somit kann im Ergebnis festgestellt werden, dass die Vorrichtung zur Durchführung des beschriebenen Beschichtungsverfahrens eine erste Benetzungsstation zur innenseitigen Benetzung der Verpackungshülle mit Kleber und eine zweite Benetzungsstation zur innenseitigen Benetzung der Verpackungshülle mit Aromastoffen aufweist und dass die Verpackungshülle in beiden Benetzungsstationen durch eingefüllten Kleber bzw. durch eingefüllte Aromastoffe jeweils in Kombination mit einem Gaspolster eine nicht-flache, offene Querschnitssform aufweist.

Des Weiteren ist jeder Benetzungsstation zumindest eine Quetschzone nachgeschaltet.

Die Vorschaltung einer Quetschzone vor jeder Benetzungsstation ist dann erforderlich, wenn die Verpackungshülle am Beginn der Benetzungsstation einen ansteigenden Verlauf aufweist. Stattdessen wird erfindungsgemäß die Verpackungshülle so geführt dass ein Durchhang entsteht, in welchem die Verpackungshülle zumindest teilweise einen nicht-flachen, offenen Querschnitt aufweist und mit dem zur innenseitigen Beschichtung dienenden Kleber oder Aromastoff in Kombination mit jeweils einem Gaspolster gefüllt ist. Dann empfiehlt sich nur am Ende der Benetzungsstation eine Quetschzone.

Für die Ausbildung der Quetschzonen bieten sich dem Fachmann verschiedene Möglichkeiten. So können die Quetschzonen etwa durch trichterartige Einschnürungen der schlauchförmigen Verpackungsfolie - eventuell kombiniert mit einer Tordierung - erzeugt werden. Besonders günstig ist es aber, die Quetschzonen durch Quetschrollen zu erzeugen, wo die schlauchförmige Verpackungsfolie in eine flache Form gezwungen wird, wo also die Wände der schlauchförmigen Verpackungsfolie in dichte Anlage miteinander gebracht werden. Eine besonders zuverlässige Abdichtung in der oberen Quetschzone wird dadurch herbeigeführt, dass die Verpackungsfolie nicht nur mit einer Quetschrolle in eine flache Form gebracht wird, sondern dass zwei Quetschrollen parallel nebeneinander angeordnet werden, die keinen oder nur einen minimalen Spalt zum Durchlass der Verpackungshülle aufweisen, so dass die Umformung des aufgeblasenen Sackes in die Flachform mit einer zusätzlichen Kompression der beiden aufeinander liegenden Schlauchlagen kombiniert wird. Man erhält dadurch eine besonders wirksame Einbettung der pulverförmigen Aromastoffe in die Kleberschicht der Verpackungshülle.

Damit das Zusammenpressen ohne lokale Beschädigung der relativ dünnen Verpackungshülle gewährleistet ist, haben die Quetschrollen vorzugsweise einen gummielastischen Außenmantel, etwa aus Moosgummi oder dergleichen. Außerdem lässt sich die Anpresswirkung zwischen den Schlauchlagen noch dadurch erhöhen, dass die Quetschrollen an ihrem Außenmantel etwa in Axialrichtung laufende Rippen, also gewissermaßen eine leichte Außenverzahnung aufweisen, wobei die Rippen benachbarter Rollen miteinander kämmen, also ineinander greifen.

Im Rahmen der Erfindung wird auf eine Quetschzone als unteren Abschluss des Aromastoff-Vorrates verzichtet, indem die Verpackungshülle in einen nach unten durchhängenden Verlauf gebracht wird, in welchem sie zumindest teilweise die nicht-flache, offene Querschnittsform einnimmt und mit dem Aromastoff-Vorrat und einem Gaspolster gefüllt ist. Das gleiche Durchhang-Prinzip lässt sich auch bei der Benetzung mit Kleber anwenden.

Bei Versuchen mit dem erfindungsgemäßen Verfahren hat sich überraschend gezeigt, dass die Gewürze eine kleinere Partikelgröße als bisher üblich aufweisen können. Vorzugsweise werden deshalb Gewürze einer Partikelgröße entsprechend 8 Mesh bis 400 Mesh, insbesondere entsprechend 30 Mesh bis 50 Mesh verwendet. Diese kleinere Partikelgröße führt bei gleicher Gewürzmenge zu einer stärkeren Aromatisierung oder erlaubt bei gleichbleibender Aromatisierung die Verringerung der Gewürzmenge, da die für den Aromatisierungsgrad entscheidende Oberfläche der Partikel bezogen auf ihre Masse bei kleinerer Partikelgröße erhöht wird.

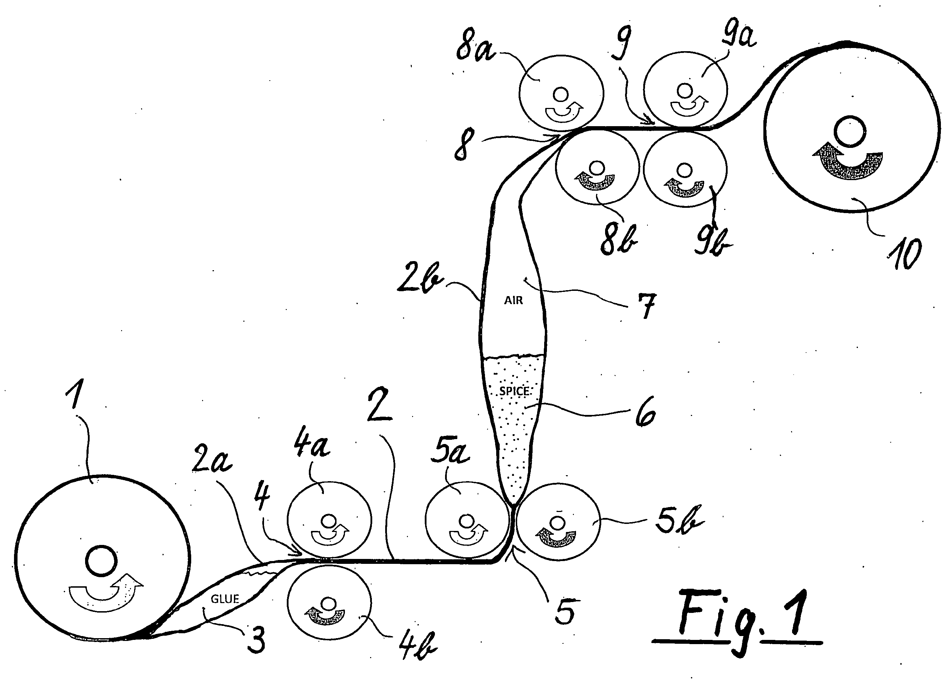

Weitere Merkmale und Vorteile der Erfindung ergeben sich aus den Unteransprüchen und der nachfolgenden Beschreibung eines Ausführungsbeispieles sowie aus der Zeichnung; dabei zeigt
- Fig. 1: eine schematische Darstellung des kompletten Beschichtungsverfahrens, wobei die fertig beschichtete Verpackungshülle am Ende aufgerollt wird;
- Fig. 2: die gleiche Darstellung, wobei die Verpackungshülle am Ende gerafft wird;
- Fig. 3: eine Alternative, bei welcher die Verpackungshülle einen Durchhang bildet.

Ausgegangen wird von einer Vorratsrolle 1, auf welcher die schlauchförmige Verpackungshülle 2 in flacher Form aufgewickelt ist. Die Vorratsrolle 1 kann beispielsweise eine 40 m bis 500 m lange Verpackungshülle aufnehmen.

Die Verpackungshülle 2 ist ein- oder mehrlagig und besteht zumindest innenseitig aus Polyamid, insbesondere einem Polyamid mit hoher Wasseraufnahme wie PA 6 oder PA 6.6. Abgesehen von der wasseraufnehmenden Innenlage kann die Hülle aus unterschiedlichstem Material bestehen, beispielsweise kann es sich um ggf. verstärkte Faserdärme, um Collagendärme oder getrocknete Naturdärme, aber auch um beschichtete Textildärme oder um Gerüstdärme, die mit Collagen, Carrageen oder Acrylat beschichtet sind oder sonstige ein- und mehrlagige Stoffe handeln. Besonders geeignet zur Kombination mit der Polyamid-Innenlage ist Polyethylen.

In den Beginn der Verpackungshülle 2, der sich als offenes Schlauchende darstellt, wird ein an sich bekannter, lebensmittelrechtlich zugelassener flüssiger Klebstoff 3 und eventuell auch Stützluft eingefüllt, so dass die Verpackungshülle die Form eines Sackes 2a erhält, der teilweise oder vollständig mit Klebstoff 3 gefüllt ist. Die Klebstoffmenge wird so bemessen, dass die gesamte auf der Vorratsrolle 1 aufgewickelte Verpackungshülle mit Klebstoff beschichtet werden kann. Die Verpackungshülle 2 wird in trockener Form dem Klebstoff zugeführt, so dass er gut aufgenommen wird. Begünstigt wird die Aufnahme des Klebstoffes dadurch, dass die Verpackungshülle innen aus Polyamid besteht, das sich durch hohe Wasseraufnahme auszeichnet. Dies garantiert eine intensive und gleichmäßige Benetzung der Verpackungshülle mit dem Kleber.

Gleichzeitig kann in den Sack 2a auch ein pulverförmiges oder flüssiges Konservierungsmittel, insbesondere auf Basis von Kaliumsorbat eingefüllt werden, damit die Verpackungshülle trotz hohen Feuchtigkeitsgehaltes vor Schimmelbildung geschützt ist. Alternativ oder zusätzlich kann dieses Konservierungsmittel auch später, etwa zusammen mit den Aromastoffen, zugeführt werden.

Als Kleber eignen sich alle lebensmittelrechtlich zugelassenen Stoffe, insbesondere Stärke, modifizierte Stärke, Gelatine, Pullulan, Xanthangum, Casein, Collagen, Carrageen, Alginat, Carboxymethylcellulose und dergleichen, jeweils in niedrig-viskoser Lösung, um eine gute Benetzung sicherzustellen.

Das untere Ende des mit Klebstoff gefüllten Sackes 2a wird im Ausführungsbeispiel durch seine dichte, den Sack verschließende Anlage an der Vorratsrolle 1 gebildet. Stattdessen könnte hier auch eine Quetschzone in Form von Quetschrollen oder dergleichen angeordnet sein.

Anschließend gelangt die Verpackungshülle zwischen zwei Quetschrollen 4a und 4b. Diese Quetschrollen drücken die Verpackungsfolie in eine flache Form und definieren durch ihre Quetschkraft die Klebstoffmenge, die beim Passieren der beiden Quetschrollen von der Verpackungshülle an ihrer Innenseite mitgenommen werden kann.

Nach dem Passieren der oben beschriebenen ersten Benetzungsstation gelangt die Verpackungshülle zu einer Quetschzone 5, die durch zwei Quetschrollen 5a und 5b gebildet ist, nach deren Passieren die Verpackungshülle wieder die Form eines Sackes annimmt, der nach oben ansteigt und zwar zweckmäßig etwa senkrecht nach oben und der durch das Bezugszeichen 2b markiert ist. Dieser Sack ist in seinem unteren Bereich mit staubtrockenen Aromapartikeln 6, insbesondere Gewürzen entsprechend 30 Mesh bis 50 Mesh, also einer Korngröße von etwa 0,3 mm bis 0,6 mm gefüllt. Die Quetschzone 5 ist hinsichtlich ihrer Anpressung gegen die flach gehaltenen und aneinander liegenden Wände der Verpackungshülle so ausgebildet, dass die Aromastoffe 6 nicht nach unten aus dem Sack 2b herausrutschen können.

Im oberen Bereich des Sackes befindet sich ein Luftpolster 7. Dieses Luftpolster 7 hat im Wesentlichen die Aufgabe, die Gewürze 6 vom oberen Sackende, das durch eine weitere Quetschzone 8 in Form zweier Quetschrollen 8a und 8b gebildet wird, zu distanzieren, so dass nur diejenigen Gewürzpartikel den Spalt zwischen den Quetschrollen 8a und 8b passieren können, die an der Innenwand der Verpackungshülle 2 haften, also keine Gewürzklumpen aus dem Vorrat 6 von den Quetschrollen erfasst und weiterbefördert werden. Die Verpackungshülle hat dann ihre zweite Benetzungsstation passiert.

Dabei ist es besonders zweckmäßig, den Sack 2b, insbesondere im oberen Bereich, leichten Vibrationen zu unterziehen, so dass zusammengebackene Gewürzklumpen von der Verpackungshülle 2 abgeschüttelt werden und in den Vorrat 6 zurückfallen. Die Gleichmäßigkeit der Gewürzbeschichtung wird dadurch sehr verbessert. Die Vibration des Sackes 2b kann durch extern angreifende Schwinger oder direkt durch entsprechende Schwingungen der oberen Quetschrollen 8a und 8b erzeugt werden.

Die Quetschrollen haben wesentlich größere Durchmesser als übliche Führungsrollen. Dies in Verbindung mit ihrem gummielastischen Außenmantel führt dazu, dass ein in Vorschubrichtung der Verpackungsfolie mehrere Zentimeter breiter Streifen entsteht, wo die Verpackungshülle zusammengepresst wird.

Das Einbringen der Gewürze 6 wie auch des Luftpolsters 7 erfolgt beim Einfädeln einer neuen Verpackungshülle, bevor der Beginn der Verpackungshülle die Quetschzone 8 erreicht. Nach Passieren der Quetschrollen 8a und 8b ergibt sich dann eine Abdichtung des Sackes 2b und gleichzeitig werden die von der Verpackungshülle nach oben mitgenommenen Gewürzteilchen durch die Quetschrollen 8a und 8b gegen die Innenwand der Verpackungshülle gepresst, so dass sie bei der weiteren Verarbeitung der Verpackungshülle gut daran haften und nicht abfallen.

Der Abstand zwischen der unteren Quetschzone 5 und der oberen Quetschzone 8 ist zweckmäßigerweise veränderlich, insbesondere dadurch, dass die Quetschrollen der oberen Quetschzone 8 nach unten verfahren werden können, um das während der Beschichtung abnehmende Volumen des Sackes 2b zu kompensieren. Dadurch ist sichergestellt, dass die Verpackungshülle eine pralle Sackform beibehält, auch wenn der Sack selbst mit zunehmender Beschichtung immer kürzer wird, weil sich die Quetschzonen 5 und 8 annähern.

Direkt hinter der Quetschzone 8 folgt zweckmäßig eine weitere Quetschzone 9, die durch Quetschrollen 9a und 9b gebildet ist. Sie intensiviert den Verbund zwischen der Verpackungshülle und den mitgenommenen Gewürzen und verbessert die Abdichtung gegenüber dem Luftpolster 7.

Schließlich gelangt die fertig beschichtete Verpackungshülle - ggf. über weitere Führungsrollen - zu einer Aufwickelrolle 10.

Sobald die Verpackungshülle durch sämtliche Quetschrollen durchgefädelt und dabei mit Klebstoff 3, Gewürzen 6 und Luftpolster 7 gefüllt, und an der Aufwickelrolle 9 befestigt worden ist, läuft sie kontinuierlich von der Vorratsrolle 1 zur Aufwickelrolle 9 und wird dabei beschichtet. Der Vorschub der Verpackungshülle erfolgt zweckmäßig durch die Quetschrollen selbst. Im Allgemeinen genügt es dabei, wenn immer nur eine von zwei miteinander korrespondierenden Quetschrollen angetrieben wird, im Ausführungsbeispiel ist dies jeweils die Quetschrolle mit dem geschwärzten Drehrichtungspfeil.

Eine Zwischentrocknung der Verpackungshülle erübrigt sich, denn durch entsprechende Prozessführung wird ihre Feuchtigkeit nach der Gewürzbeschichtung bei etwa 10 % bis maximal etwa 20 % gehalten.

Vorzugsweise ist in allen Quetschzonen eine der beiden Quetschrollen hinsichtlich ihres Abstandes zur benachbarten Quetschrolle verstellbar, um das Einfädeln der Verpackungshülle 2 zu erleichtern.

Die beschriebene Verpackungshülle 2 kann abgesehen von ihrer wasseraufnehmenden Innenlage aus nahezu beliebigem Material bestehen, ein oder mehrlagig ausgebildet sein, ggf. auch mit Beschichtungen und/oder mit Laminaten, insbesondere um die Hülle gegenüber Wasserdampf und/oder Sauerstoff weitgehend undurchlässig zu machen.

Im Ausführungsbeispiel wird die beschichtete Verpackungshülle 2 in flacher Form einer Aufwickelrolle 10 zugeführt. Stattdessen ist es aber auch möglich, die Verpackungshülle online zu raffen.

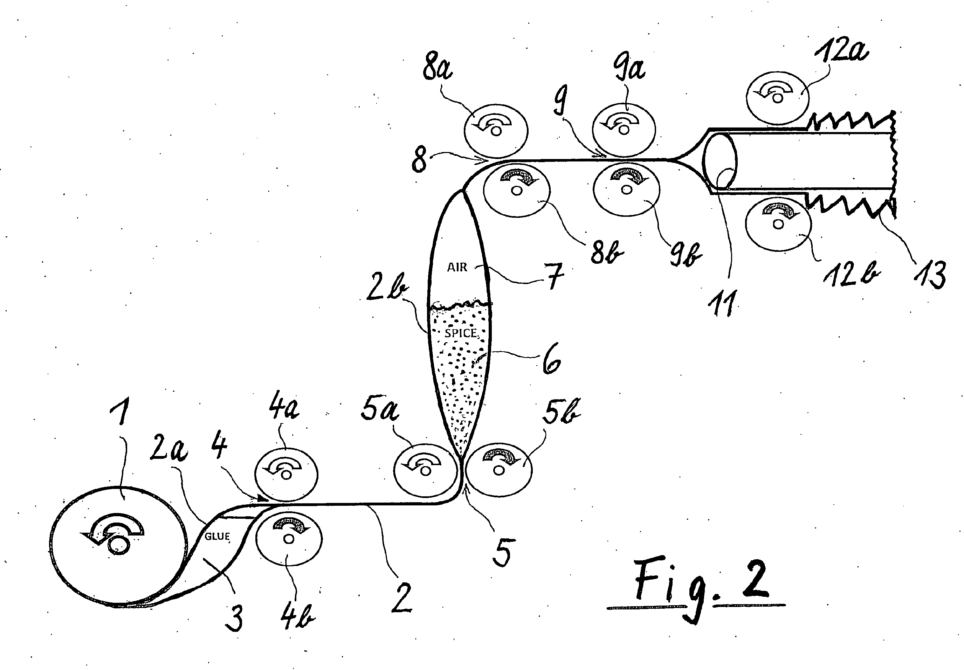

Diese besonders bevorzugte Variante ist in Figur 2 dargestellt. Die fertig beschichtete Verpackungshülle 2 wird dazu axial auf ein zylindrisches Raffrohr 11 gefördert, und zwar mittels mehrerer über den Umfang verteilter Raffrollen, von denen zwei Raffrollen 12a und 12b sichtbar sind. Nach Passieren dieser Raffrollen werden etwa 5 m bis etwa 50 m lange Abschnitte der Verpackungshülle, durch axiale Stauchung in Ziehharmonika-artige Raupen 13 geformt, wie sie bevorzugt von der Fleischwaren- und Käseindustrie gewünscht werden.

Der Raffvorgang selbst ist an sich bekannt und wird deshalb nicht weiter im Detail beschrieben. Wesentlich ist aber, dass sich der Raffvorgang direkt an die Innenbeschichtung der Verpackungshülle mit Gewürzpartikeln anschließt, ohne dass die Verpackungshülle einer Erhitzung bzw. Trocknung bedarf. Dadurch ergibt sich eine erhebliche Energieeinsparung.

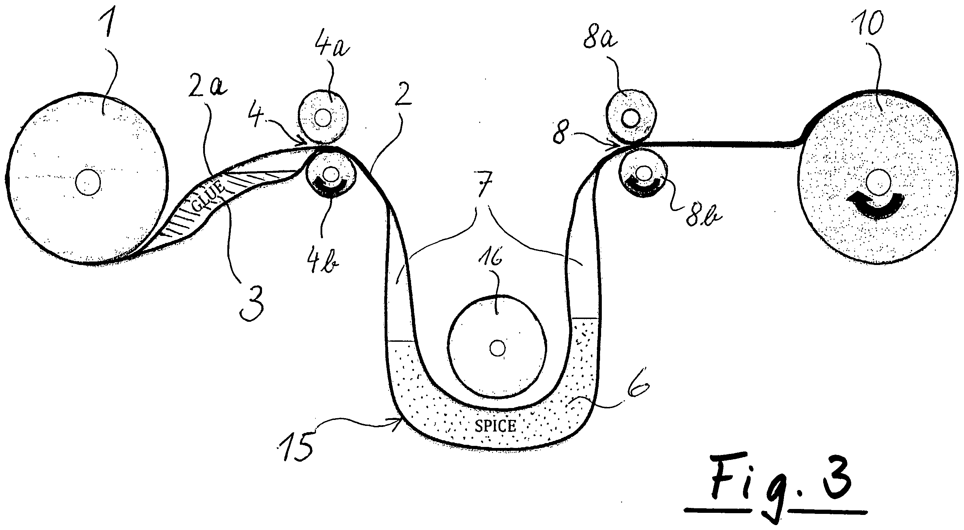

Figur 3 zeigt eine erfindungsgemäße Führung der Verpackungshülle 2. Dabei wird auf die untere Quetschzone 5 und auf die Bildung des vertikalen Sackes 2b verzichtet und die Verpackungshülle wird stattdessen so geführt, dass sie einen Durchhang 15 bildet. Im Bereich dieses Durchhanges ist die Verpackungshülle mit dem partikelförmigen Aromastoff-Vorrat 6 teilweise gefüllt, so dass sich der Aromastoff-Vorrat im unteren Bereich des Durchhanges sammelt, wogegen in den beiden nach oben laufenden Bereichen des Durchhanges 15 oberhalb des Aromastoff-Vorrates Luftpolster 7 in der Verpackungshülle enthalten sind. Wesentlich dabei ist, dass der Aromastoff-Vorrat 6 so bemessen ist, dass er bis zum Schluss des Beschichtungsverfahrens die Verpackungshülle entlang deren gesamten Umfang benetzt.

Wie Figur 3 zeigt, steht der Aromastoff-Vorrat 6 in dem rechts ansteigenden Teil des Durchhanges 15 höher als im linken Bereich. Dies rührt daher, dass die Verpackungshülle aufgrund ihres Vorschubes, Aromastoff in den rechts ansteigenden Ast des Durchhanges 15 transportiert, bis sich aufgrund der Füllhöhen-Differenz ein Gleichgewichtszustand einstellt.

Im Ausführungsbeispiel verläuft der Durchhang 15 um eine innerhalb des Durchganges angeordnete Rolle 16. Zwingend notwendig ist diese Rolle nicht, sie kann aber als Tänzerrolle eingesetzt werden, um den Vorschub, also insbesondere den Antrieb an der Quetschzone 8 so zu steuern, dass der Durchhang 15 während des Beschichtungsvorganges die gewünschte Durchhängtiefe beibehält. Es geht dabei im Wesentlichen darum, den Aromastoff-Vorrat 6 hinreichend von der folgenden Quetschzone 8 distanziert zu halten.

Im Übrigen entspricht das Beschichtungsverfahren in Figur 3 dem vorbeschriebenen Verfahren; es werden deshalb auch die gleichen Bezugszeichen für die entsprechenden Teile verwendet.

## Patentansprüche

1. Verfahren zur Beschichtung schlauchförmiger Lebensmittel-Verpackungshüllen (2), insbesondere Därme, mit Aromastoffen in Partikelform, insbesondere Gewürzen, indem die schlauchförmige Verpackungshülle (2) innenseitig mit Kleber (3) benetzt wird und auf die gebildete Kleberschicht die gewünschten Aromastoffe (6) aufgebracht werden,
**dadurch gekennzeichnet,**
**dass** die innenseitig mit Kleber (3) benetzte Verpackungshülle (2) durch einen in das Schlauchinnere eingebrachten partikelförmigen Aromastoff-Vorrat (6) und ein Gaspolster (7), insbesondere Luftpolster, in eine nicht-flache, offene Querschnittsform gebracht wird, dass die Verpackungshülle an ihrer mit Kleber benetzten Innenseite Aromastoffe aus dem Aromastoff-Vorrat (6) mitnimmt, wenn sie durch den Aromastoff-Vorrat hindurchgezogen wird und dass die Verpackungshülle (2) zumindest innenseitig überwiegend aus einem wasseraufnehmenden Kunststoff besteht.

2. Verfahren nach Anspruch 1,
**dadurch gekennzeichnet,**
**dass** der wasseraufnehmende Kunststoff aus zumindest einem Polyamid, vorzugsweise PA 4, PA 6 oder PA 6.6 besteht.

3. Verfahren nach Anspruch 1,
**dadurch gekennzeichnet,**
**dass** die Verpackungshülle (2) mehrlagig ausgebildet ist.

4. Verfahren nach Anspruch 3,
**dadurch gekennzeichnet,**
**dass** die innenseitige Lage aus wasseraufnehmendem Kunststoff eine Dicke von maximal etwa 1/10 mm, vorzugsweise eine Dicke zwischen etwa 5 µm bis etwa 50 µm, insbesondere zwischen 6 µm bis etwa 20 µm aufweist

5. Verfahren nach Anspruch 4,
**dadurch gekennzeichnet,**
**dass** die innenseitige Lage zumindest innenseitig eine Rauhigkeit von zumindest 0,1 µm, vorzugsweise zumindest 0,5µm aufweist.

6. Verfahren nach Anspruch 1,
**dadurch gekennzeichnet,**
**dass** die Verpackungshülle (2) eine Dicke zwischen etwa 20 µm bis etwa 80 µm, vorzugsweise zwischen etwa 30 µm bis etwa 50 µm aufweist.

7. Verfahren nach Anspruch 3,
**dadurch gekennzeichnet,**
**dass** die innere Lage aus wasseraufnehmendem Kunststoff kombiniert ist mit Polyethylen.

8. Verfahren nach Anspruch 3,
**dadurch gekennzeichnet,**
**dass** die mehrlagige Verpackungshülle (2) durch Coextrusion und/oder durch Laminieren hergestellt wird.

9. Verfahren nach Anspruch 1,
**dadurch gekennzeichnet,**
**dass** die Verpackungshülle (2) mit Kleber (3) benetzt wird, indem ein flüssiger Kleber-Vorrat und ggf. ein Gaspolster in das Innere der in nicht-flacher Form vorliegenden Schlauchhülle eingebracht werden und die Verpackungshülle durch den Kleber-Vorrat hindurchgezogen wird.

10. Verfahren nach Anspruch 9,
**dadurch gekennzeichnet,**
**dass** die Verpackungshülle (2) nach ihrer Benetzung mit Kleber zumindest eine Quetschzone (4) passiert.

11. Verfahren nach Anspruch 1,
**dadurch gekennzeichnet,**
**dass** die Beschichtung der mit Kleber benetzten Verpackungshülle (2) mit den gewünschten Aromastoffen derart erfolgt, dass ein pulverförmiger Aromastoff-Vorrat (6) und ggf. ein Gaspolster (7) in das Innere der in nicht-flacher Form vorliegenden Verpackungshülle (2) eingebracht werden und die Verpackungshülle durch den Aromastoff-Vorrat (6) hindurchgezogen wird.

12. Verfahren nach Anspruch 10,
**dadurch gekennzeichnet,**
**dass** die Verpackungshülle (2) steil nach oben durch den Aromastoff-Vorrat hindurchgezogen wird und der untere Abschluss des Aromastoff-Vorrates durch eine Quetschzone (5) gebildet wird.

13. Verfahren, insbesondere nach Anspruch 1,
**dadurch gekennzeichnet,**
**dass** die innenseitig mit Kleber benetzte Verpackungshülle (2) in einen nach unten durchhängenden Verlauf (15) gebracht wird, in welchem sie zumindest teilweise die nicht-flache, offene Querschnittsform einnimmt und mit dem Aromastoff-Vorrat (6) und dem Gaspolster (7) gefüllt ist.

14. Verfahren nach Anspruch 10 oder 12,
**dadurch gekennzeichnet,**
**dass** die Quetschzone (4,8) durch Umlenkrollen erzeugt wird, wo die schlauchförmige Verpackungshülle einer Anpressung unterzogen wird.

15. Verfahren nach Anspruch 1,
**dadurch gekennzeichnet,**
**dass** in dem Aromastoff-Vorrat (6) Gewürze mit einer Partikelgröße entsprechend 8 Mesh bis 400 Mesh, vorzugsweise etwa 30 Mesh bis etwa 50 Mesh verwendet werden.

16. Verfahren nach Anspruch 1,
**dadurch gekennzeichnet,**
**dass** die Verpackungshülle (2) nach ihrer Beschichtung mit den Aromastoffen (6) ohne anschließende Trocknung aufgewickelt wird.

17. Verfahren nach Anspruch 1,
**dadurch gekennzeichnet,**
**dass** die Verpackungshülle (2) nach ihrer Beschichtung mit den Aromastoffen (6) ohne anschließende Trocknung in eine geraffte Form gebracht, insbesondere in geraffte Teilstücke, nämlich Raupen (13) handelsüblicher Länge separiert wird.

18. Verfahren nach einem der vorhergehenden Ansprüche,
**dadurch gekennzeichnet,**
**dass** die Verpackungshülle (2) nach ihrer Beschichtung mit Aromastoffen im Bereich oberhalb des Aromastoff-Vorrates (6) Schüttelbewegungen unterzogen wird, um nicht-verklebten Aromastoff abzuschütteln.

19. Vorrichtung zur Durchführung des Verfahrens nach einem der vorhergehenden Ansprüche, die eine erste Benetzungsstation zur innenseitigen Benetzung der Verpackungshülle (2) mit Kleber (3) und eine zweite Benetzungsstation zur innenseitigen Benetzung der Verpackungshülle (2) mit Aromastoffen (6) aufweist, wobei die Verpackungshülle (2) in beiden Benetzungsstationen durch eingefüllten Kleber (3) bzw. durch eingefüllte Aromastoffe (6) jeweils in Kombination mit einem Gaspolster die Form eines Sackes (2a, 2b) aufweist,
**dadurch gekennzeichnet,**
**dass** die Verpackungshülle (2) in der Vorrichtung unter Bildung eines Durchhanges (15) mit zumindest teilweise nicht-flachem, offenem Querschnitt geführt ist.

20. Vorrichtung nach Anspruch 19,
**dadurch gekennzeichnet,**
**dass** der Durchhang (15) den Aromastoff-Vorrat (6) und oberhalb desselben Luftpolster (7) enthält.

## Claims

1. Method for coating tubular food casings (2), especially intestines, with flavourings in particulate form, especially seasonings, by wetting the tubular casing (2) on the inside with adhesive (3) and applying the desired flavourings (6) to the resulting adhesive layer,
**characterised in that**
the casing (2) that has been wetted on the inside with adhesive (3) is formed into a non-flat, open cross-sectional shape by a supply (6) of particulate flavourings introduced into the interior of the tube and a gas cushion (7), especially an air cushion; the casing, on its inner side that has been wetted with adhesive, picks up flavourings from the flavourings supply (6) when it is drawn through the flavourings supply; and the casing (2), at least on the inside, consists predominantly of a water-absorbing plastics material.

2. Method according to claim 1,
**characterised in that**
the water-absorbing plastics material consists of at least one polyamide, preferably PA 4, PA 6 or PA 6.6.

3. Method according to claim 1,
**characterised in that**
the casing (2) is of multi-layered construction.

4. Method according to claim 3,
**characterised in that**
the inside layer of water-absorbing plastics material has a thickness of maximally about 1/10 mm, preferably a thickness between about 5 µm and about 50 µm, especially between 6 µm and about 20 µm.

5. Method according to claim 4,
**characterised in that**
the inside layer has, at least on the inside, a roughness of at least 0.1 µm, preferably at least 0.5 µm.

6. Method according to claim 1,
**characterised in that**
the casing (2) has a thickness of between about 20 µm and about 80 µm, preferably between about 30 µm and about 50 µm.

7. Method according to claim 3,
**characterised in that**
the inner layer of water-absorbing plastics material is combined with polyethylene.

8. Method according to claim 3,
**characterised in that**
the multi-layered casing (2) is produced by co-extrusion and/or by lamination.

9. Method according to claim 1,
**characterised in that**
the casing (2) is wetted with adhesive (3) by introducing a liquid adhesive supply and optionally a gas cushion into the interior of the tubular casing in non-flat form, and the casing is drawn through the adhesive supply.

10. Method according to claim 9,
**characterised in that**
the casing (2), after being wetted with adhesive, passes through at least one squeezing zone (4).

11. Method according to claim 1,
**characterised in that**
the coating of the adhesive-wetted casing (2) with the desired flavourings is effected by introducing a supply (6) of powdered flavourings and optionally a gas cushion (7) into the interior of the casing (2) in non-flat form and drawing the casing through the adhesive supply (6).

12. Method according to claim 10,
**characterised in that**
the casing (2) is drawn steeply upwards through the flavourings supply and the lower closure of the flavourings supply is formed by a squeezing zone (5).

13. Method, especially according to claim 1,
**characterised in that**
the casing (2) that has been wetted on the inside with adhesive is guided so as to follow a downward-sagging course (15) in which it at least in part assumes the non-flat, open cross-sectional shape and is filled with the flavourings supply (6) and the gas cushion (7).

14. Method according to claim 10 or 12,
**characterised in that**
the squeezing zone (4, 8) is created by guide rollers, where the tubular casing is subjected to compression.

15. Method according to claim 1,
**characterised in that**
the seasonings used in the flavourings supply (6) have a particle size corresponding to from 8 mesh to 400 mesh, preferably from approximately 30 mesh to approximately 50 mesh.

16. Method according to claim 1
**characterised in that**
the casing (2), after being coated with the flavourings (6), is rolled up without subsequent drying.

17. Method according to claim 1,
**characterised in that**
after being coated with the flavourings (6), the casing (2), without subsequent drying, is shaped into a shirred form, especially separated into shirred sections, that is to say sticks (13) of commercially customary length.

18. Method according to any one of the preceding claims,
**characterised in that**
the casing (2), after being coated with flavourings, is subjected to shaking movements in the region above the flavourings supply (6) in order to shake off non-adherent flavouring.

19. Device for carrying out the method according to any one of the preceding claims, which has a first wetting station for wetting the inside of the casing (2) with adhesive (3) and a second wetting station for wetting the inside of the casing (2) with flavourings (6), wherein in both wetting stations the casing (2) has the form of a bag (2a, 2b) due to introduced adhesive (3) and introduced flavourings (6), respectively, in each case in combination with a gas cushion,
**characterised in that**
the casing (2) is guided in the device with the formation of a sagging portion (15) having at least in part a non-flat, open cross-section.

20. Device according to claim 19,
**characterised in that**
the sagging portion (15) contains the flavourings supply (6) and, thereabove, air cushions (7).

## Revendications

1. Procédé de revêtement, par des substances aromatiques sous forme particulaire et notamment des épices, d'enveloppes (2) de forme tubulaire souple, en particulier des boyaux destiné(e)s au conditionnement d'aliments, l'enveloppe de conditionnement (2), de forme tubulaire souple, étant imprégnée intérieurement à l'aide d'un adhésif (3) et les substances aromatiques souhaitées (6) étant déposées sur la couche d'adhésif constituée,
**caractérisé par le fait**
**que** l'enveloppe de conditionnement (2), intérieurement imprégnée d'adhésif (3), est amenée à une configuration de section transversale ouverte, non aplatie, par une réserve en substances aromatiques particulaires (6) introduite dans l'espace tubulaire intérieur souple et par un coussin de gaz (7), notamment un coussin d'air ; par le fait que ladite enveloppe de conditionnement prélève des substances aromatiques de ladite réserve en substances aromatiques (6), au niveau de sa face interne imprégnée d'adhésif, lorsqu'elle est charriée à travers ladite réserve en substances aromatiques ; et par le fait que ladite enveloppe de conditionnement (2) est constituée en majeure partie, au moins intérieurement, d'une matière plastique absorbant l'eau.

2. Procédé selon la revendication 1,
**caractérisé par le fait**
**que** la matière plastique absorbant l'eau est constituée d'au moins un polyamide, préférentiellement de PA 4, de PA 6 ou de PA 6.6.

3. Procédé selon la revendication 1,
**caractérisé par le fait**
**que** l'enveloppe de conditionnement (2) est réalisée en plusieurs couches.

4. Procédé selon la revendication 3,
**caractérisé par le fait**
**que** la couche intérieure en matière plastique absorbant l'eau présente une épaisseur d'environ 1/10 mm au maximum, de préférence une épaisseur d'environ 5 µm à environ 50 µm, notamment de 6 µm à environ 20 µm.

5. Procédé selon la revendication 4,
**caractérisé par le fait**
**que** la couche intérieure présente, au moins à la face interne, une rugosité d'au moins 0,1 µm, préférentiellement d'au moins 0,5 µm.

6. Procédé selon la revendication 1,
**caractérisé par le fait**
**que** l'enveloppe de conditionnement (2) présente une épaisseur d'environ 20 µm à environ 80 µm, préférentiellement d'environ 30 µm à environ 50 µm.

7. Procédé selon la revendication 3,
**caractérisé par le fait**
**que** la couche intérieure, en matière plastique absorbant l'eau, est combinée à du polyéthylène.

8. Procédé selon la revendication 3,
**caractérisé par le fait**
**que** l'enveloppe de conditionnement (2) en plusieurs couches est produite par coextrusion et/ou par stratification.

9. Procédé selon la revendication 1,
**caractérisé par le fait**
**que** l'enveloppe de conditionnement (2) est imprégnée d'adhésif (3) en introduisant, dans l'espace interne de ladite enveloppe tubulaire souple se présentant sous une forme non aplatie, une réserve en adhésif liquide et éventuellement un coussin de gaz, et en charriant ladite enveloppe de conditionnement à travers ladite réserve en adhésif.

10. Procédé selon la revendication 9,
**caractérisé par le fait**
**que** l'enveloppe de conditionnement (2) franchit au moins une zone d'écrasement (4) à l'issue de son imprégnation par de l'adhésif.

11. Procédé selon la revendication 1,
**caractérisé par le fait**
**que** le revêtement de l'enveloppe de conditionnement (2) imprégnée d'adhésif, par les substances aromatiques souhaitées, est opéré en introduisant une réserve en substances aromatiques pulvérulentes (6), et éventuellement un coussin de gaz (7), dans l'espace interne de ladite enveloppe de conditionnement (2) se présentant sous une forme non aplatie, et en charriant ladite enveloppe de conditionnement à travers ladite réserve en substances aromatiques (6).

12. Procédé selon la revendication 10,
**caractérisé par le fait**
**que** l'enveloppe de conditionnement (2) est charriée en pente raide de bas en haut à travers la réserve en substances aromatiques, et la terminaison inférieure de ladite réserve en substances aromatiques est formée par une zone d'écrasement (5).

13. Procédé selon la revendication 1 en particulier,
**caractérisé par le fait**
**que** l'enveloppe de conditionnement (2), intérieurement imprégnée d'adhésif, est amenée à un tracé (15) à fléchissement libre vers le bas dans lequel elle adopte, au moins en partie, la configuration de section transversale ouverte non aplatie, et est emplie par la réserve en substances aromatiques (6) et par le coussin de gaz (7).

14. Procédé selon la revendication 10 ou 12,
**caractérisé par le fait**
**que** la zone d'écrasement (4, 8) est créée par des rouleaux de renvoi au niveau desquels l'enveloppe de conditionnement, de forme tubulaire souple, est soumise à une pression de contact.

15. Procédé selon la revendication 1,
**caractérisé par le fait**
**que** des épices dotées d'une grosseur de particules correspondant à de 8 mesh à 400 mesh, préférentiellement d'environ 30 mesh à environ 50 mesh, sont utilisées dans la réserve en substances aromatiques (6).

16. Procédé selon la revendication 1,
**caractérisé par le fait**
**que** l'enveloppe de conditionnement (2) est bobinée à l'issue de son revêtement par les substances aromatiques (6), sans aucun séchage consécutif.

17. Procédé selon la revendication 1,
**caractérisé par le fait**
**qu'**à l'issue de son revêtement par les substances aromatiques (6) sans séchage consécutif, l'enveloppe de conditionnement (2) est amenée à une forme froncée, notamment débitée en des fragments froncés, c'est-à-dire en des tronçons (13) de longueur courante dans le commerce.

18. Procédé selon l'une des revendications précédentes,
**caractérisé par le fait**
**qu'**à l'issue de son revêtement par des substances aromatiques, l'enveloppe de conditionnement (2) est soumise à des mouvements de secousse dans la région située au-dessus de la réserve en substances aromatiques (6) en vue d'éliminer, par des secousses, une substance aromatique non agglutinée.

19. Dispositif dévolu à la mise en œuvre du procédé conforme à l'une des revendications précédentes, muni d'un premier poste d'imprégnation conçu pour imprégner intérieurement l'enveloppe de conditionnement (2) à l'aide d'un adhésif (3), et un second poste d'imprégnation conçu pour imprégner intérieurement ladite enveloppe de conditionnement (2) à l'aide de substances aromatiques (6), sachant que, dans les deux postes d'imprégnation, des adhésifs (3) déversés, et des substances aromatiques (6) déversées, confèrent respectivement la forme d'un sac (2a, 2b) à ladite enveloppe de conditionnement (2) en combinaison avec un coussin de gaz,
**caractérisé par le fait**
**que** l'enveloppe de conditionnement (2) est guidée, dans ledit dispositif, avec formation d'une flèche libre (15) de section transversale ouverte, au moins partiellement non aplatie.

20. Dispositif selon la revendication 19,
**caractérisé par le fait**
**que** la flèche libre (15) renferme la réserve en substances aromatiques (6), et un coussin d'air (7) au-dessus de cette dernière.
